# EUROPEAN PATENT APPLICATION

(11) **EP 4 109 586 A1**
(43) Date of publication of application: **28.12.2022**
(21) Application number: 21774007.5
(22) Date of filing: 22.03.2021
(51) Int. Cl.: H01M 4/13, H01M 4/62, H01G 11/24, H01G 11/36

(54) **POSITIVE ELECTRODE FOR ENERGY STORAGE ELEMENT AND ENERGY STORAGE ELEMENT**

(30) Priority: 24.03.2020 JP 2020053070
(71) Applicant: GS Yuasa International Ltd., Kisshoin, Minami-ku, Kyoto-shi, Kyoto 601-8520 (JP)
(72) Inventor: YAMAKAWA, Mayu, Kyoto-shi, Kyoto 601-8520 (JP); UEMATSU, Shinya, Kyoto-shi, Kyoto 601-8520 (JP)
(74) Representative: Isarpatent
(86) International application number: PCT/JP2021/011640
(87) International publication number: WO 2021/193500

(57) **Abstract**

A positive electrode for an energy storage device according to one aspect of the present invention includes a positive active material layer containing a positive active material and a carbon nanotube, in which in a Log differential pore volume distribution of the positive active material layer measured by a mercury intrusion method, an average value of a ratio of a Log differential pore volume to a pore diameter in a range of a pore diameter of 20 nm or more and 200 nm or less is 3000 cm²/g or more.

## Description

### TECHNICAL FIELD

The present invention relates to a positive electrode for an energy storage device and an energy storage device.

### BACKGROUND ART

Nonaqueous electrolyte secondary batteries typified by lithium ion secondary batteries are widely used for electronic devices such as personal computers and communication terminals, motor vehicles, and the like since these secondary batteries have a high energy density. The nonaqueous electrolyte secondary batteries generally include a pair of electrodes, which are electrically separated from each other by a separator, and a nonaqueous electrolyte interposed between the electrodes, and are configured to allow ions to be transferred between the two electrodes for charge-discharge. Capacitors such as lithium ion capacitors and electric double-layer capacitors are also widely in use as energy storage devices except for the nonaqueous electrolyte secondary batteries.

It is known that discharge rate performance is improved by adding a carbon nanotube having good electron conductivity to a positive electrode of such an energy storage device (see Patent Document 1).

### PRIOR ART DOCUMENT

### PATENT DOCUMENT

Patent Document 1: JP-A-2015-53165

### SUMMARY OF THE INVENTION

### PROBLEMS TO BE SOLVED BY THE INVENTION

As an energy source for the motor vehicles and the like, an energy storage device having high discharge rate performance is required. However, even when the carbon nanotube is added to the positive electrode, the discharge rate performance may not necessarily be improved.

The present invention has been made in view of the above circumstances, and an object of the present invention is to provide a positive electrode for an energy storage device capable of reliably improving discharge rate performance of the energy storage device using a carbon nanotube.

### MEANS FOR SOLVING THE PROBLEMS

A positive electrode for an energy storage device according to one aspect of the present invention includes a positive active material layer containing a positive active material and a carbon nanotube, in which in a Log differential pore volume distribution of the positive active material layer measured by a mercury intrusion method, an average value of a ratio of a Log differential pore volume to a pore diameter in a range of a pore diameter of 20 nm or more and 200 nm or less is 3000 cm²/g or more.

### ADVANTAGES OF THE INVENTION

The positive electrode for an energy storage device according to one aspect of the present invention can reliably improve discharge rate performance of the energy storage device by using the carbon nanotube.

### BRIEF DESCRIPTION OF THE DRAWINGS

Fig. 1 is an external perspective view showing an energy storage device according to one embodiment of the present invention.
Fig. 2 is a schematic view showing an energy storage apparatus configured by aggregating a plurality of energy storage devices according to one embodiment of the present invention.

### MODE FOR CARRYING OUT THE INVENTION

A positive electrode for an energy storage device according to one aspect of the present invention includes a positive active material layer containing a positive active material and a carbon nanotube, in which in a Log differential pore volume distribution of the positive active material layer measured by a mercury intrusion method, an average value of a ratio of a Log differential pore volume to a pore diameter in a range of a pore diameter of 20 nm or more and 200 nm or less is 3000 cm²/g or more.

In the positive electrode for an energy storage device, since the positive active material layer contains the carbon nanotube and has a specific pore volume distribution, discharge rate performance of the energy storage device can be reliably improved. The reason for this is presumed to be that the ion diffusibility in the positive active material layer is improved as the positive composite layer contains a carbon nanotube, the number of pores formed by the carbon nanotube is controlled by adjusting the average diameter and the addition amount of the carbon nanotube and setting the average value of the ratio of the Log differential pore volume to the pore diameter in the range of the pore diameter of 20 nm or more and 200 nm or less of the positive composite layer to 3000 cm²/g or more, and an effect of improving the ion diffusibility in the positive composite layer by the carbon nanotube is further exhibited. Accordingly, in the positive electrode for an energy storage device, since the positive composite layer contains the carbon nanotube and has the specific pore volume distribution, the discharge rate performance of the energy storage device can be improved. Here, the "Log differential pore volume (dV/d (logD))" indicates a relationship between a pore size of an object to be measured and its volume, and refers to a value obtained by dividing a differential pore volume dV, which is an increase in pore volume between measurement points of the pore diameter, by a logarithmic differential value d (logD) of the pore diameter. The log differential pore volume distribution is obtained by plotting the log differential pore volume against an average pore diameter in each section.

In the Log differential pore volume distribution, a peak of the Log differential pore volume preferably exists in a range of a pore diameter of 20 nm or more and 200 nm or less. When the peak of the Log differential pore volume exists in the pore diameter range of 20 nm or more and 200 nm or less, the discharge rate performance of the energy storage device can be further improved. Here, the "peak of Log differential pore volume" has a general convex shape, and is a peak only when a differential value changes from positive to negative by differentiating the obtained Log differential pore volume distribution.

In the Log differential pore volume distribution, the maximum value of the Log differential pore volume in the pore diameter range of 20 nm or more and 200 nm or less is preferably 0.04 cm³/g or more. When the maximum value of the Log differential pore volume in the pore diameter range of 20 nm or more and 200 nm or less is 0.04 cm³/g or more, the discharge rate performance of the energy storage device can be further improved.

The energy storage device according to one aspect of the present invention includes the positive electrode. The energy storage device has excellent discharge rate performance by including the positive electrode.

Hereinafter, the positive electrode for an energy storage device and the nonaqueous electrolyte energy storage device according to one embodiment of the present invention will be described in detail in order.

### <Positive electrode for energy storage device>

The positive electrode has a positive electrode substrate and a positive composite layer disposed directly or via an intermediate layer on the positive electrode substrate.

### (Positive electrode substrate)

The positive electrode substrate exhibits conductivity. Having "conductivity" means that the volume resistivity measured in accordance with JIS-H0505 (1975) is 1 × 10⁷ Ω ·cm or less, and "non-conductive" means that the volume resistivity is more than 1 × 10⁷ Ω ·cm.

The average thickness of the positive electrode substrate is preferably 5 pm or more and 50 pm or less, and more preferably 10 pm or more and 40 pm or less. When the average thickness of the positive electrode substrate is within the above-described range, it is possible to enhance the energy density per volume of the energy storage device while increasing the strength of the positive electrode substrate. The "average thickness of the substrate" refers to a value obtained by dividing a cutout mass in cutout of a substrate having a predetermined area by a true density and a cutout area of the substrate, and the same applied to the negative electrode substrate.

As the material of the positive electrode substrate, a metal such as aluminum, titanium, tantalum, or stainless steel, or an alloy thereof is used. Among these, aluminum or an aluminum alloy is preferable from the viewpoint of electric potential resistance, high conductivity, and costs. Examples of the shape of the positive electrode substrate include a foil, a deposited film, a mesh, and a porous material, and a foil is preferable from the viewpoint of costs. Accordingly, the positive electrode substrate is preferably an aluminum foil or an aluminum alloy foil. Examples of the aluminum or aluminum alloy include A1085, A1N30, A3003, and the like specified in JIS-H-4000 (2014) or JIS-H-4160 (2006).

### (Positive composite layer)

The positive composite layer is formed from a so-called positive composite containing a positive active material and a carbon nanotube. In addition, the positive composite contains optional components such as other conductive agent, a binder, a thickener, a filler, or the like as necessary.

The positive active material can be appropriately selected from, for example, known positive active materials. As the positive active material for a lithium ion secondary battery, a material capable of storing and releasing lithium ions is usually used. Examples of the positive active material include lithium-transition metal composite oxides having an α-NaFeO₂-type crystal structure, lithium-transition metal composite oxides having a spinel-type crystal structure, polyanion compounds, chalcogenides, and sulfur. Examples of the lithium-transition metal composite oxide having an α-NaFeO₂ type crystal structure include Li[LiₓNi₍ᵢ₋ₓ₎]O₂ (0 ≤ x < 0.5), Li[LiₓNi_{γ}Co_{(1-x-γ)}]O₂ (0 ≤ x < 0.5, 0 < γ < 1), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < γ < 1), Li[LiₓNi_{γ}Mn_{β}Co_{(1-x-γ-β})]O₂ (0 ≤ x < 0.5, 0 < γ, 0 < β, 0.5 < γ + β < 1), and Li[LiₓNi_{γ}Co_{β}Al_{(1-x-γ-β)}]O₂ (0 ≤ x < 0.5, 0 < γ, 0 < β, 0.5 < γ + β < 1). Examples of the lithium-transition metal composite oxides having a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include titanium disulfide, molybdenum disulfide, and molybdenum dioxide. A part of atoms or polyanions in these materials may be substituted with atoms or anion species composed of other elements. The surfaces of these materials may be coated with other materials. In the positive active material layer, one of these materials may be used singly or two or more thereof may be used in mixture. The content of the positive active material in the positive active material layer is not particularly limited, but the lower limit thereof is preferably 50% by mass, more preferably 80% by mass, and still more preferably 90% by mass. On the other hand, the upper limit of this content is preferably 99% by mass, and may be 98% by mass.

The positive active material is usually particles (powder). The average particle size of the positive active material is preferably 0.1 pm or more and 20 pm or less, for example. By setting the average particle size of the positive active material to be equal to or greater than the above lower limit, the positive active material is easily manufactured or handled. By setting the average particle size of the positive active material to be equal to or less than the upper limit, the electron conductivity of the positive active material layer is improved. It is to be noted that in the case of using a composite of the positive active material and another material, the average particle size of the composite is regarded as the average particle size of the positive active material. The term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher or a classifier is used to obtain a powder having a predetermined particle size. Examples of a crushing method include a method in which a mortar, a ball mill, a sand mill, a vibratory ball mill, a planetary ball mill, a jet mill, a counter jet mill, a whirling airflow type jet mill, or a sieve or the like is used. At the time of crushing, wet type crushing in the presence of water or an organic solvent such as hexane can also be used. As a classification method, a sieve or a wind force classifier or the like is used based on the necessity both in dry manner and in wet manner.

The content of the positive active material in the positive active material layer is not particularly limited, but the lower limit thereof is preferably 50% by mass or more and 99% by mass or less, more preferably 70% by mass or more and 98% by mass or less, and still more preferably 80% by mass or more and 95% by mass or less. When the content of the positive active material is in the above range, it is possible to achieve both high energy density and productivity of the positive active material layer.

### (Conductive agent)

As described above, the positive active material layer contains a carbon nanotube as a conductive agent. The carbon nanotube is a cylindrical carbon material. The carbon nanotube may be single-walled or multi-walled. One kind or two or more kinds of carbon nanotubes may be used in combination.

The average diameter and length of the carbon nanotube are not particularly limited. The lower limit of the average diameter of the carbon nanotube is, for example, 1 nm, and is preferably 5 nm and more preferably 10 nm from the viewpoint of suppressing an excessive increase in viscosity of a positive composite coating liquid (positive composite paste) for forming a positive active material layer. The upper limit of the average diameter of the carbon nanotube is, for example, 100 nm, preferably 70 nm. That is, as the average diameter of the carbon nanotube, a carbon nanotube having an average diameter of 1 nm or more and 100 nm or less can be used, and from the viewpoint of improving charge-discharge cycle performance, a carbon nanotube having an average diameter of 10 nm or more and 70 nm or less is preferable. The length of the carbon nanotube is not particularly limited, and for example, a carbon nanotube having a length of 1 pm or more and 100 pm or less can be used. Here, the "average diameter" refers to an average value obtained by measuring diameters of 10 arbitrary carbon nanotubes in observation of a positive electrode using a scanning electron microscope (SEM) or a transmission electron microscope (TEM), and when a plurality of carbon nanotubes are coaxially tubular like a multi-walled carbon nanotube, the diameter of the outermost peripheral carbon nanotube is measured.

The other conductive agent is not particularly limited as long as it is a material having conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene and fullerene. Examples of the shape of the conductive agent include a powdery shape and a fibrous shape. As the other conductive agent, one of these materials may be used singly, or two or more thereof may be mixed and used. These materials may be composited and used. Among these materials, carbon black is preferable as the other conductive agent from the viewpoint of electron conductivity and coatability, and among the carbon black, acetylene black is preferable.

The lower limit of a content of a carbon nanotube in terms of solid content in the positive active material layer is sometimes preferably 0.01% by mass, more preferably 0.1% by mass, further more preferably 0.5% by mass. The upper limit of the content of the carbon nanotube is preferably 7% by mass, more preferably 3% by mass, and sometimes preferably 2% by mass. When the content of the carbon nanotube in terms of solid content in the positive active material layer is within the above range, it is possible to improve the discharge rate performance of the energy storage device while suppressing an excessive increase in viscosity of the positive composite coating liquid (positive composite paste) for forming a positive active material layer.

A mass ratio of the other conductive agent to the carbon nanotube is preferably 0 or more and 30 or less, more preferably 1 or more and 25 or less, further more preferably 2.5 or more and 20 or less, particularly preferably 3 or more and 15 or less, and sometimes preferably 3 or more and 6 or less. When the mass ratio of the other conductive agent to the carbon nanotube is in the above range, an excessive increase in viscosity of the positive composite coating liquid (positive composite paste) for forming a positive active material layer can be suppressed, and the pore volume distribution of the positive active material layer can be easily set to a specific range.

The positive active material layer preferably contains other conductive agent in addition to the carbon nanotube, and more preferably contains carbon black as other conductive agent. A mass ratio of carbon black to the carbon nanotube is preferably 0 or more and 30 or less, more preferably 1 or more and 25 or less, further more preferably 2.5 or more and 20 or less, particularly preferably 3 or more and 15 or less, and sometimes preferably 3 or more and 6 or less. When the mass ratio of the carbon black to the carbon nanotube is in the above range, an excessive increase in viscosity of the positive composite coating liquid (positive composite paste) for forming a positive active material layer can be suppressed, and the effect of the present invention is more remarkably exhibited.

A total content of the conductive agent in the positive active material layer is preferably 1% by mass or more and 10% by mass or less, more preferably 1% by mass or more and 9% by mass or less, particularly preferably 1% by mass or more and 4% by mass or less. By setting the total content of the conductive agent within the above range, the energy density of the energy storage device can be enhanced.

### (Other components)

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as ethylene-propylene-diene rubber (EPDM), sulfonated EPDM, styrenebutadiene rubber (SBR), and fluororubber; and polysaccharide polymers.

The content of the binder in the positive active material layer is preferably 1% by mass or more and 10% by mass or less, and more preferably 3% by mass or more and 9% by mass or less. When the content of the binder is in the above range, the active material can be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The positive active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Nb, or W as a component other than the positive active material, the conductive agent, the binder, the thickener, and the filler.

In the Log differential pore volume distribution of the positive active material layer measured by the mercury intrusion method, the lower limit of the average value of the ratio of the Log differential pore volume to the pore diameter in the pore diameter range of 20 nm or more and 200 nm or less is 3000 cm²/g, and more preferably 3500 cm²/g. On the other hand, the upper limit of the average value of the ratio of the Log differential pore volume to the pore diameter is preferably 12000 cm²/g. When the range of the average value of the ratio of the Log differential pore volume to the pore diameter is the above range, the positive electrode for an energy storage device can improve the discharge rate performance of the energy storage device by adding a carbon nanotube.

The Log differential pore volume in the pore diameter range of 20 nm or more and 200 nm or less of the positive active material layer is measured by the mercury intrusion method based on the following procedure. The pore volume distribution is measured by the mercury intrusion method using AutoPore 9400 (Micromeritics Instrument Corporation). A contact angle of mercury is set to 130°, and a surface tension is set to 484 dynes/cm. A pore diameter range to be measured is 0.006 to 20 pm. The number of measurement points in the pore diameter range of 20 nm or more and 200 nm or less is 11 points. A cumulative pore volume curve is obtained by plotting the pore diameter on the horizontal axis and the pore volume on the vertical axis. Next, a value obtained by dividing the difference volume dV between the measurement points by the logarithmic differential value d (logD) of the pore diameter is determined, and this value is plotted against the average pore diameter of each section to obtain a Log differential pore volume curve. The "average value of the ratio of the Log differential pore volume to the pore diameter in the pore diameter range of 20 nm or more and 200 nm or less" is determined by summing the values of the respective Log differential pore volumes at the respective measurement points in the pore diameter range of 20 nm or more and 200 nm or less in the Log differential pore volume curve and dividing the sum by the number of measurement points in the pore diameter range of 20 nm or more and 200 nm or less. A sample of the positive active material layer to be subjected to the measurement of the pore volume distribution is provided by the following method. The energy storage device is discharged with a current of 0.1 C until the voltage becomes an end-of-discharge voltage under normal usage, so that the energy storage device is brought to a discharge end state. Here, the term "under normal usage" means use of the energy storage device while employing charge-discharge conditions recommended or specified in the energy storage device. The energy storage device in the discharge end state is disassembled, the positive electrode is taken out and used as a working electrode, a single-electrode battery is assembled with metal Li as a counter electrode, and discharge is performed at a current of 0.1 C until a positive electrode potential reaches 3.0 V (vs. Li/Li⁺). The single-electrode battery is disassembled, and the taken out positive electrode is sufficiently washed with dimethyl carbonate, and then dried under reduced pressure at room temperature. The dried positive electrode is cut into a predetermined size (for example, 2 × 2 cm), and used as a sample in the measurement of the pore volume distribution. Operations from disassembling the battery to cutting out the sample in the measurement of the pore volume distribution are performed in a dry air atmosphere having a dew point of -40°C or lower.

In the Log differential pore volume distribution, a peak of the Log differential pore volume preferably exists in a range of a pore diameter of 20 nm or more and 200 nm or less. When the peak of the Log differential pore volume exists in the pore diameter range of 20 nm or more and 200 nm or less, the discharge rate performance of the energy storage device can be further improved. The peak of the Log differential pore volume may have two or more peaks in the pore diameter range of 20 nm or more and 200 nm or less, or may be multimodal.

In the Log differential pore volume distribution, the maximum value of the Log differential pore volume in the pore diameter range of 20 nm or more and 200 nm or less is preferably 0.04 cm³/g or more. When the maximum value of the Log differential pore volume in the pore diameter range of 20 nm or more and 200 nm or less is 0.04 cm³/g or more, the discharge rate performance of the energy storage device can be further improved.

### (Intermediate layer)

The intermediate layer is a layer arranged between the positive electrode substrate and the positive active material layer. The intermediate layer contains conductive particles such as carbon particles to reduce contact resistance between the positive electrode substrate and the positive active material layer. The configuration of the intermediate layer is not particularly limited, and includes, for example, a binder and a conductive agent.

According to the positive electrode for an energy storage device, the discharge rate performance of the energy storage device can be improved by adding a carbon nanotube.

### <Energy storage device>

The energy storage device according to one embodiment of the present invention has a positive electrode, a negative electrode, and a nonaqueous electrolyte. Hereinafter, a nonaqueous electrolyte secondary battery will be described as an example of the energy storage device. The positive electrode and the negative electrode usually form an electrode assembly in which the positive electrode and the negative electrode are alternately superposed by being stacked or wound with a separator interposed therebetween. This electrode assembly is housed in a case, and a nonaqueous electrolyte is filled in this case. The nonaqueous electrolyte is interposed between the positive electrode and the negative electrode. As the case, a known aluminum case, resin case or the like that is usually used as a case of a nonaqueous electrolyte secondary battery can be used.

### [Positive electrode]

The positive electrode included in the energy storage device is as described above.

### [Negative electrode]

The negative electrode includes a negative electrode substrate and a negative active material layer stacked directly or indirectly on at least one surface of the negative electrode substrate. The negative electrode may include an intermediate layer disposed between the negative electrode substrate and the negative active material layer. The intermediate layer may have the same configuration as the intermediate layer of the positive electrode.

### (Negative electrode substrate)

The negative electrode substrate exhibits conductivity. As the material of the negative electrode substrate, a metal such as copper, nickel, stainless steel, nickel-plated steel, or aluminum, an alloy thereof, a carbonaceous material, or the like is used. Among these metals and alloys, copper or a copper alloy is preferable. Examples of the shape of the negative electrode substrate include a foil, a deposited film, a mesh, and a porous material, and a foil is preferable from the viewpoint of costs. Therefore, the negative electrode substrate is preferably a copper foil or a copper alloy foil. Examples of the copper foil include a rolled copper foil and an electrolytic copper foil.

The average thickness of the negative electrode substrate is preferably 2 pm or more and 35 pm or less, more preferably 3 pm or more and 30 pm or less, still more preferably 4 pm or more and 25 pm or less, particularly preferably 5 pm or more and 20 pm or less. By setting the average thickness of the negative electrode substrate to the above range, it is possible to increase the energy density per volume of a secondary battery while increasing the strength of the negative electrode substrate.

### (Negative active material layer)

The negative active material layer contains a negative active material. The negative active material layer contains optional components such as a conductive agent, a binder, a thickener, and a filler and the like as necessary. The optional components such as a conductive agent, a binder, a thickener, and a filler can be selected from the materials exemplified for the positive electrode.

The negative active material can be appropriately selected from known negative active materials. As the negative active material for a lithium ion secondary battery, a material capable of absorbing and releasing lithium ions is usually used. Examples of the negative active material include metallic Li; metals or metalloids such as Si and Sn; metal oxides or metalloid oxides such as a Si oxide, a Ti oxide, and a Sn oxide; titanium-containing oxides such as Li₄Ti₅O₁₂, LiTiO₂, and TiNb₂O₇; a polyphosphoric acid compound; silicon carbide; and carbon materials such as graphite and non-graphitic carbon (hardly graphitizable carbon or easily graphitizable carbon). Among these materials, graphite and non-graphitic carbon are preferable. In the negative active material layer, one of these materials may be used singly or two or more thereof may be used in mixture.

The term "graphite" refers to a carbon material in which an average lattice spacing (d₀₀₂) of the (002) plane determined by an X-ray diffraction method before charge-discharge or in a discharged state is 0.33 nm or more and less than 0.34 nm. Examples of the graphite include natural graphite and artificial graphite.

The "non-graphitic carbon" refers to a carbon material in which the average lattice spacing (d₀₀₂) of the (002) plane determined by the X-ray diffraction method before charge-discharge or in the discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from petroleum pitch, a petroleum coke or a material derived from petroleum coke, a plant-derived material, and an alcohol derived material. The "hardly graphitizable carbon" refers to a carbon material in which the d₀₀₂ is 0.36 nm or more and 0.42 nm or less. The "easily graphitizable carbon" refers to a carbon material in which the d₀₀₂ is 0.34 nm or more and less than 0.36 nm.

In this regard, the "discharged state" means a state discharged such that lithium ions that can be occluded and released in association with charge-discharge are sufficiently released from the carbon material that is the negative active material. For example, the "discharged state" refers to a state where an open circuit voltage is 0.7 V or higher in a half cell that has, for use as a working electrode, a negative electrode containing a carbon material as a negative active material, and has metal Li for use as a counter electrode.

The negative active material is typically particles (powder). The average particle size of the negative active material can be, for example, 1 nm or more and 100 pm or less. When the negative active material is a carbon material, a titanium-containing oxide, or a polyphosphoric acid compound, the average particle size thereof may be 1 pm or more and 100 pm or less. When the negative active material is Si, Sn, an oxide of Si, an oxide of Sn, or the like, the average particle size thereof may be 1 nm or more and 1 pm or less. By setting the average particle size of the negative active material to be equal to or greater than the lower limit, the negative active material is easily produced or handled. By setting the average particle size of the negative active material to be equal to or less than the above upper limit, the electron conductivity of the positive active material layer is improved. A crusher or a classifier is used to obtain a powder having a predetermined particle size. A crushing method and a powder classification method can be selected from, for example, the methods exemplified for the positive electrode. When the negative active material is a metal such as metal Li, the negative active material may have the form of foil.

The content of the negative active material in the negative active material layer is preferably 60% by mass or more and 99% by mass or less, and more preferably 90% by mass or more and 98% by mass or less. When the content of the negative active material is in the above range, it is possible to achieve both high energy density and productivity of the negative active material layer.

The negative active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Ta, Hf, Nb, or W as a component other than the negative active material, the conductive agent, the binder, the thickener, and the filler.

### [Separator]

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining property of the nonaqueous electrolyte. As the material of the substrate layer of the separator, a polyolefin such as polyethylene or polypropylene is preferable from the viewpoint of a shutdown function, and polyimide, aramid or the like is preferable from the viewpoint of resistance to oxidation and decomposition. As the substrate layer of the separator, a material obtained by combining these resins may be used.

The heat resistant particles included in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Inorganic compounds can be mentioned as materials whose mass loss is a predetermined value or less. Examples of the inorganic compounds include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite and mica, and artificial products thereof. As the inorganic compounds, a simple substance or a complex of these substances may be used alone, or two or more thereof may be used in mixture. Among these inorganic compounds, silicon oxide, aluminum oxide, or aluminosilicate is preferable from the viewpoint of safety of the energy storage device.

The porosity of the separator is preferably 80% by volume or less from the viewpoint of strength, and is preferably 20% by volume or more from the viewpoint of discharge performance. The "porosity" herein is a volume-based value, and means a value measured with a mercury porosimeter.

As the separator, a polymer gel composed of a polymer and a nonaqueous electrolyte may be used.

Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has the effect of suppressing liquid leakage. As the separator, a polymer gel may be used in combination with a porous resin film, a nonwoven fabric, or the like as described above.

### [Nonaqueous electrolyte]

The nonaqueous electrolyte can be appropriately selected from known nonaqueous electrolytes. As the nonaqueous electrolyte, a nonaqueous electrolyte solution may be used. The nonaqueous electrolyte solution contains a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. Among these, it is preferable to use at least the cyclic carbonate or the chain carbonate, and it is more preferable to use the cyclic carbonate and the chain carbonate in combination. When the cyclic carbonate and the chain carbonate are used in combination, the volume ratio of the cyclic carbonate to the chain carbonate (cyclic carbonate : chain carbonate) is not particularly limited but is preferably from 5 : 95 to 50 : 50, for example.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, catechol carbonate, 1-phenylvinylene carbonate, and 1,2-diphenylvinylene carbonate. Among these examples, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these examples, EMC is preferable.

The electrolyte salt can be appropriately selected from known electrolyte salts. Examples of the electrolyte salt include a lithium salt, a sodium salt, a potassium salt, a magnesium salt, and an onium salt. Among these salts, the lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃ and LiC(SO₂C₂F₅)₃. Among these salts, an inorganic lithium salt is preferable, and LiPF₆ is more preferable.

The content of the electrolyte salt in the nonaqueous electrolyte solution is, at 20°C under 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less. The content of the electrolyte salt falls within the above range, thereby allowing the ionic conductivity of the nonaqueous electrolyte solution to be increased.

The nonaqueous electrolyte solution may contain an additive, besides the nonaqueous solvent and the electrolyte salt. Examples of the additive include halogenated carbonic acid esters such as fluoroethylene carbonate (FEC) and difluoroethylene carbonate (DFEC); oxalic acid esters such as lithium bis(oxalate)borate (LiBOB), lithium difluorooxalatoborate (LiFOB), and lithium bis(oxalate)difluorophosphate (LiFOP); imide salt such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, propane sultone, propene sultone, butane sultone, methyl methanesulfonate, busulfan, methyl toluenesulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. These additives may be used singly, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to a total mass of the nonaqueous electrolyte solution. The content of the additive falls within the above range, thereby making it possible to improve capacity retention performance or cycle performance after high-temperature storage, and to further improve safety.

As the nonaqueous electrolyte, a solid electrolyte may be used, or a nonaqueous electrolyte solution and a solid electrolyte may be used in combination.

The solid electrolyte can be selected from any material having ionic conductivity such as lithium, sodium and calcium and being solid at room temperature (for example, 15°C to 25°C). Examples of the solid electrolyte include sulfide solid electrolytes, oxide solid electrolytes, oxynitride solid electrolytes, and polymer solid electrolytes.

Examples of the lithium ion secondary battery include Li₂S-P₂S₅, LiI-Li₂S-P₂S₅, and Li₁₀Ge-P₂S₁₂ as the sulfide solid electrolyte.

### [Specific configuration of energy storage device]

The shape of the energy storage device of the present embodiment is not particularly limited, and examples thereof include cylindrical batteries, prismatic batteries, flat batteries, coin batteries and button batteries.

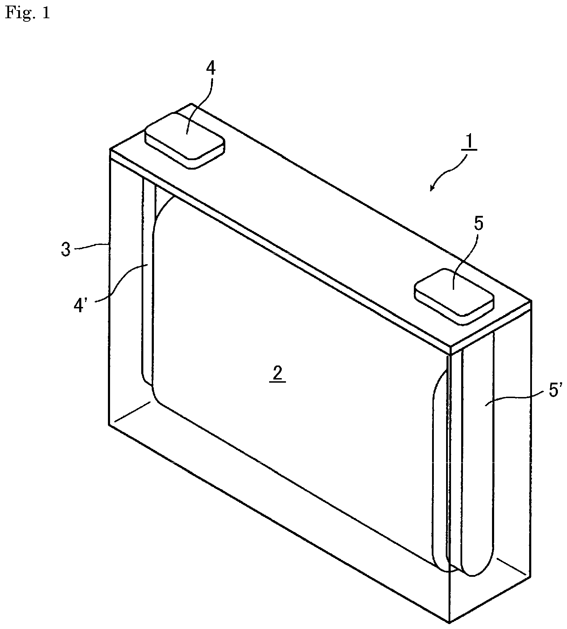

Fig. 1 shows an energy storage device 1 as an example of a prismatic battery. Fig. 1 is a view showing an inside of a case in a perspective manner. An electrode assembly 2 having a positive electrode and a negative electrode which are wound with a separator interposed therebetween is housed in a prismatic case 3. The positive electrode is electrically connected to a positive electrode terminal 4 through a positive electrode lead 4'. The negative electrode is electrically connected to a negative electrode terminal 5 through a negative electrode lead 5'.

### [Method for manufacturing energy storage device]

The nonaqueous electrolyte secondary battery (energy storage device) can be manufactured by a known method except for using the positive electrode as the positive electrode. The method of producing the energy storage device can includes, for example, preparing a positive electrode, preparing a negative electrode, preparing a nonaqueous electrolyte, forming an electrode assembly in which the positive electrode and the negative electrode are alternately superposed by stacking or winding the positive electrode and the negative electrode with a separator interposed between the electrodes, housing the positive electrode and the negative electrode (electrode assembly) in a case (battery case), and injecting the nonaqueous electrolyte into the case. The injection can be performed by a known method. A nonaqueous electrolyte secondary battery (energy storage device) can be obtained by sealing an injection port after the injection.

The energy storage device has excellent discharge rate performance by including the positive electrode.

### <Other embodiments>

The energy storage device of the present invention is not limited to the embodiments described above, and various changes may be made without departing from the scope of the present invention. For example, to the configuration of an embodiment, the configuration of another embodiment can be added, and a part of the configuration of an embodiment can be replaced by the configuration of another embodiment or a well-known technique. Furthermore, a part of the configuration according to one embodiment can be removed. In addition, a well-known technique can be added to the configuration according to one embodiment.

In the above embodiment, the energy storage device is a nonaqueous electrolyte secondary battery, but other energy storage devices may be used. Examples of the other energy storage devices include capacitors (electric double-layer capacitor, lithium ion capacitor). Examples of the nonaqueous electrolyte secondary battery include a lithium ion nonaqueous electrolyte secondary battery.

The present invention can also be realized as an energy storage apparatus including a plurality of the energy storage devices. An assembled battery can be constituted using one or a plurality of energy storage devices (cells) of the present invention, and an energy storage apparatus can be constituted using the assembled battery. The energy storage apparatus can be used as a power source for an automobile, such as an electric vehicle (EV), a hybrid vehicle (HEV), or a plug-in hybrid vehicle (PHEV). The energy storage apparatus can be used for various power source apparatuses such engine starting power source apparatuses, auxiliary power source apparatuses, and uninterruptible power systems (UPSs).

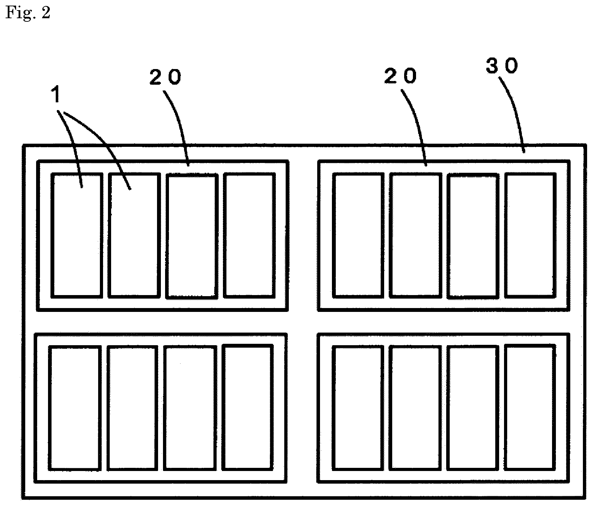

Fig. 2 shows an example of an energy storage apparatus 30 formed by assembling energy storage units 20 in each of which two or more electrically connected energy storage devices 1 are assembled. The energy storage apparatus 30 may include a busbar (not illustrated) for electrically connecting two or more energy storage devices 1 and a busbar (not illustrated) for electrically connecting two or more energy storage units 20. The energy storage unit 20 or the energy storage apparatus 30 may include a state monitor (not illustrated) for monitoring the state of one or more energy storage devices.

### EXAMPLES

Hereinafter, the present invention will be described in more detail with reference to Examples, but the present invention is not limited to the following Examples.

### (Fabrication of positive electrode)

As a positive active material, a lithium-transition metal composite oxide represented by a composition formula: LiMeO₂ (Me is Ni/Co/Mn = 60/20/20) was used. Carbon black and a carbon nanotube having a mass ratio shown in Table 1 were used as a conductive agent. The average diameter and length of the carbon nanotube used are shown in Table 1. Polyvinylidene fluoride was used as a binder.

N-methylpyrrolidone (NMP) was used as a dispersion medium, and a positive composite paste was obtained by mixing so that the content of the binder in terms of solid content in the positive active material layer was 3% by mass, and the content of the positive active material and the total of the conducting agent shown in Table 1 in terms of solid content was the balance. Next, the positive composite paste was applied to both surfaces of an aluminum foil as a positive electrode substrate, leaving a non-applied portion (positive active material layer non-forming portion), dried at 100°C, and roll-pressed to form a positive active material layer on the positive electrode substrate. The amount of the positive composite paste applied was set to 18 mg/cm² in terms of solid content. In this way, positive electrodes of Examples 1 to 5 and Comparative Examples 1 to 4 were obtained. "-" in Table 1 below indicates that no corresponding component was used.

### (Fabrication of negative electrode)

Graphite was used as the negative active material, styrenebutadiene rubber (SBR) was used as a binder, and carboxymethyl cellulose (CMC) was used as a thickener. An appropriate amount of water was added to a mixture obtained by mixing the negative active material, the binder and the thickener at a mass ratio of 97 : 2 : 1 to adjust the viscosity, thereby preparing a negative composite paste. The negative composite paste was applied to both surfaces of a copper foil, leaving a non-applied portion (negative active material layer non-forming portion), and dried to prepare a negative active material layer. Thereafter, roll pressing was performed to fabricate a negative electrode.

### (Preparation of nonaqueous electrolyte)

LiPF₆ was dissolved at a concentration of 1 mol/dm³ in a mixed solvent in which EC and EMC were mixed at a volume ratio of 30 : 70 to prepare a nonaqueous electrolyte.

### (Fabrication of energy storage device)

Next, the positive electrode and the negative electrode were laminated via a separator made of a polyethylene porous resin film substrate and a heat resistant layer formed on the polyethylene porous resin film substrate to prepare an electrode assembly. The electrode assembly was housed into an aluminum prismatic container case, and a positive electrode terminal and a negative electrode terminal were attached. After the nonaqueous electrolyte was injected into the case (prismatic container can), the nonaqueous electrolyte was sealed to obtain the energy storage devices of Examples and Comparative Examples.

### (Initial capacity confirmation test)

For each of the energy storage devices, constant current charge was performed at 25°C to 4.25 V at a current value of 1.0 C, and then constant voltage charge was performed at 4.25 V. With regard to the charge termination conditions, charge was performed until the total charge time reached 3 hours. After charge, a pause time of 10 minutes was provided, and then constant current discharge was performed at 25°C to 2.75 V at a current value of 0.2 C. After the discharging, a pause time of 10 minutes was provided. The above cycle was repeated twice.

### (Measurement of Log differential pore volume)

For each energy storage device after the initial capacity confirmation test, the Log differential pore volume distribution of the positive active material layer was measured by the above-described method, and the average value of the ratio of the Log differential pore volume to the pore diameter in the pore diameter range of 20 nm or more and 200 nm or less was calculated. The results are shown in Table 1. In Examples and Comparative Examples, in the Log differential pore volume distribution, the peak of the Log differential pore volume existed in the pore diameter range of 20 nm or more and 200 nm or less.

### (Discharge rate performance test: discharge capacity ratio)

For each energy storage device after the initial capacity confirmation test, constant current charge was performed at 25°C to 4.25 V at a current value of 1 C, and then constant voltage charge was performed at 4.25 V. With regard to the charge termination conditions, charge was performed until the charge current reached 0.01 C. After charge, a pause time of 10 minutes was provided, and then constant current discharge was performed at 25°C to 2.75 V at a current value of 0.2 C to measure "0.2 C discharge capacity". After the discharging, a pause time of 10 minutes was provided. Next, constant current charge was performed at 25°C to 4.25 V at a current value of 1 C, and then constant voltage charge was performed at 4.25 V. With regard to the charge termination conditions, charge was performed until the charge current reached 0.01 C. After charge, a pause period of 10 minutes was provided, and then constant current discharge was performed at 25°C to 2.75 V at a current value of 5.0 C to measure "5 C discharge capacity".

From the 0.2 C discharge capacity and the 5 C discharge capacity, as an index indicating the discharge rate performance, a percentage of the 5 C discharge capacity to the 0.2 C discharge capacity is shown as "discharge capacity ratio (%)" in Table 1.

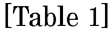

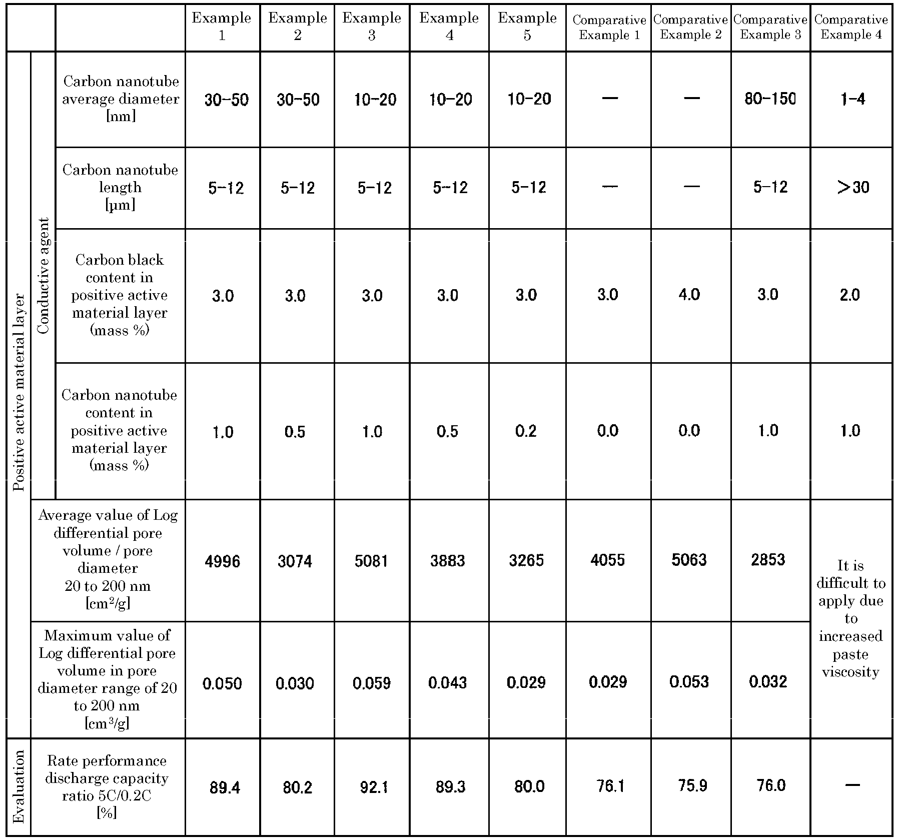

As shown in Table 1 above, it can be seen that Examples 1 to 5 in which the positive active material layer contains the carbon nanotube as a conductive agent, and in the Log differential pore volume distribution of the positive active material layer measured by the mercury intrusion method, the average value of the ratio of the Log differential pore volume to the pore diameter in the pore diameter range of 20 nm or more and 200 nm or less is 3000 cm²/g or more have more excellent discharge rate performance than that of Comparative Examples 1 to 3. In Comparative Example 4 in which the average diameter of the carbon nanotube was remarkably small, the viscosity of the positive composite paste was high due to a high aggregation action of the carbon nanotube, and the positive active material layer could not be formed.

### INDUSTRIAL APPLICABILITY

The present invention can be applied to an energy storage device used as a power source for electronic devices such as personal computers and communication terminals, motor vehicles, and the like.

### DESCRIPTION OF REFERENCE SIGNS

1: energy storage device
2: electrode assembly
3: case
4: positive electrode terminal
4': positive electrode lead
5: negative electrode terminal
5': negative electrode lead
20: energy storage unit
30: energy storage apparatus

## Claims

1. A positive electrode for an energy storage device comprising a positive active material layer containing a positive active material and a carbon nanotube,
wherein in a Log differential pore volume distribution of the positive active material layer measured by a mercury intrusion method, an average value of a ratio of a Log differential pore volume to a pore diameter in a range of a pore diameter of 20 nm or more and 200 nm or less is 3000 cm²/g or more.

2. The positive electrode for an energy storage device according to claim 1, wherein in the Log differential pore volume distribution, a peak of the Log differential pore volume exists in the range of the pore diameter of 20 nm or more and 200 nm or less.

3. The positive electrode for an energy storage device according to claim 1 or 2, wherein in the Log differential pore volume distribution, a maximum value of the Log differential pore volume in the range of the pore diameter of 20 nm or more and 200 nm or less is 0.04 cm³/g or more.

4. An energy storage device comprising the positive electrode according to claim 1, 2, or 3.
